(19) Europäisches Patentamt
European Patent Office
Office européen des brevets

(11) **EP 2 994 992 B1**

(12) **EUROPÄISCHE PATENTSCHRIFT**

(45) Veröffentlichungstag und Bekanntmachung des Hinweises auf die Patenterteilung:
**22.06.2022   Patentblatt 2022/25**

(21) Anmeldenummer: **14721906.7**

(22) Anmeldetag: **08.05.2014**

(51) Internationale Patentklassifikation (IPC):
*H02P 9/00* *(2006.01)*        *H02P 9/42* *(2006.01)*

(52) Gemeinsame Patentklassifikation (CPC):
**H02P 27/05; H02P 9/007; H02P 9/42**

(86) Internationale Anmeldenummer:
**PCT/EP2014/059469**

(87) Internationale Veröffentlichungsnummer:
**WO 2014/180957 (13.11.2014 Gazette 2014/46)**

(54) **ANTRIEBSSYSTEM**

DRIVE SYTSME

SYSTÈME D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2013   DE 102013208544**

(43) Veröffentlichungstag der Anmeldung:
**16.03.2016   Patentblatt 2016/11**

(73) Patentinhaber: **Lenze Drives GmbH**
**32699 Extertal (DE)**

(72) Erfinder: **TOLKSDORF, Andreas**
**31789 Hameln (DE)**

(74) Vertreter: **Patentanwälte**
**Ruff, Wilhelm, Beier, Dauster & Partner mbB**
**Kronenstraße 30**
**70174 Stuttgart (DE)**

(56) Entgegenhaltungen:
• **NAVEED UR REHMAN MALIK ET AL: "Brushless doubly-fed induction machine with rotating power electronic converter for wind power applications", ELECTRICAL MACHINES AND SYSTEMS (ICEMS), 2011 INTERNATIONAL CONFERENCE ON, IEEE, 20. August 2011 (2011-08-20), Seiten 1-6, XP032020184, DOI: 10.1109/ICEMS.2011.6073422 ISBN: 978-1-4577-1044-5**

• **SEIFERT D: "ENERGIEERZEUGUNG AUS WIND- UND WASSERKRAFT DURCH KASKADENSCHALTUNGEN", ANTRIEBSTECHNIK, VEREINIGTE FACHVERLAGE, MAINZ, DE, Bd. 40, Nr. 11, 1. November 2001 (2001-11-01), Seiten 59-64, XP001112017, ISSN: 0722-8546**

• **BOGER M S ET AL: "GENERAL POLE NUMBER MODEL OF THE BRUSHLESS DOUBLY-FED MACHINE", IEEE TRANSACTIONS ON INDUSTRY APPLICATIONS, IEEE SERVICE CENTER, PISCATAWAY, NJ, US, Bd. 31, Nr. 5, 1. September 1995 (1995-09-01), Seiten 1022-1028, XP000535579, ISSN: 0093-9994, DOI: 10.1109/28.464515**

• **NAVEED-UR-REHMAN MALIK ET AL: "Dynamic modeling and control of a brushless doubly-fed induction generator with a rotating power electronic converter", ELECTRICAL MACHINES (ICEM), 2012 XXTH INTERNATIONAL CONFERENCE ON, IEEE, 2. September 2012 (2012-09-02), Seiten 900-906, XP032464824, DOI: 10.1109/ICELMACH.2012.6349983 ISBN: 978-1-4673-0143-5**

**Beschreibung**

Die Erfindung betrifft ein Antriebssystem basierend auf einem doppelt gespeisten Asynchronmotor.

Bei der so genannten Stromrichterkaskade eines doppelt gespeisten Asynchronmotors werden auftretende Rotorströme bzw. Rotorleistungen üblicherweise über Schleifringe abgeführt. Die Schleifringe sind jedoch stör- und wartungsanfällig.

Die Nichtpatentliteratur NAVEED UR REHMAN MALIK ET AL.: "Brushless doubly-fed induction machine with rotating power electronic converter for wind power applications", ELECTRICAL MACHINES AND SYSTEMS (ICEMS), 2011 INTERNATIONAL CONFERENCE ON, IEEE, 20. August 2011 (2011-08-20), Seiten 1-6, XP032020184, DOI: 10.1109/ICEMS.2011.6073422 ISBN: 978-1-4577-1044-5 zeigt eine bürstenlose, doppeltgespeiste Induktionsmaschine mit zwei Wechselrichtern, die drehfest mit einer angetriebenen Welle verbunden sind. Die Induktionsmaschine weist einen ersten Wicklungssatz und einen zweiten Wicklungssatz auf, wobei eine Statorwicklung des zweiten Wicklungssatzes ein DC-Wicklungssystem ist.

Die Nichtpatentliteratur BOGER M S ET AL, "GENERAL POLE NUMBER MODEL OF THE BRUSHLESS DOUBLY-FED MACHINE", IEEE TRANSACTIONS ON INDUSTRY APPLICATIONS, IEEE SERVICE CENTER, PISCATAWAY, NJ, US, (19950901), vol. 31, no. 5, doi:10.1109/28.464515, ISSN 0093-9994, Seiten 1022-1028, XP000535579 zeigt ein Polmodell einer bürstenlosen doppelt gespeisten Maschine.

Der Erfindung liegt die Aufgabe zugrunde, ein Antriebssystem basierend auf einem doppelt gespeisten Asynchronmotor zur Verfügung zu stellen, das keine Schleifringe benötigt und das verglichen mit herkömmlichen doppelt gespeisten Asynchronmotoren verbesserte Betriebseigenschaften aufweist.

Die Erfindung löst diese Aufgabe durch ein Antriebssystem nach Anspruch 1.

Das Antriebssystem weist einen Drehstrommotor und genau einen Wechselrichter auf.

Der Drehstrommotor weist herkömmlich eine durch ihn angetriebene Welle auf.

Der Drehstrommotor weist weiter eine erste dreiphasige Statorwicklung auf, die herkömmlich, insbesondere ohne Zwischenschaltung eines Wechselrichters, direkt mit einem dreiphasigen Wechselspannungsnetz zur Erzeugung eines ersten magnetischen Statordrehfelds zu verbinden bzw. verbunden ist.

Der Drehstrommotor weist weiter eine zweite dreiphasige Statorwicklung auf, die mit dem dreiphasigen Wechselspannungsnetz derart zu verbinden ist, dass sich gegenüber dem ersten magnetischen Statordrehfeld, das mittels der ersten Statorwicklung erzeugt wird, ein gegensinnig umlaufendes zweites magnetisches Statordrehfeld ergibt.

Der Drehstrommotor weist weiter ein Rotorwicklungssystem auf, das mit der Welle drehfest mechanisch gekoppelt ist. Das Rotorwicklungssystem kann gleichmäßig über den Rotorumfang verteilte Spulengruppen aufweisen.

Der Wechselrichter ist mit der Welle drehfest mechanisch gekoppelt, d.h. dreht mit der Welle mit, und elektrisch mit dem Rotorwicklungssystem gekoppelt, wobei der Wechselrichter dazu ausgebildet ist, Ansteuersignale in Form von Ansteuerspannungen und/oder Ansteuerströmen für das Rotorwicklungssystem derart zu erzeugen, dass ein erstes Rotordrehfeld und ein zweites, vom ersten Rotordrehfeld verschiedenes Rotordrehfeld erzeugt werden, wobei das erste Rotordrehfeld mit dem ersten Statordrehfeld derart wechselwirkt, dass sich eine erste Motordrehzahl und ein erstes Drehmoment ergibt, und wobei das zweite Rotordrehfeld mit dem zweiten Statordrehfeld derart wechselwirkt, dass sich die erste Motordrehzahl und ein zweites Drehmoment ergibt, wobei das zweite Drehmoment eine bezogen auf das erste Drehmoment identische Wirkrichtung bzw. Drehrichtung aufweist.

Die beiden Statordrehfelder laufen entgegengesetzt um. Daraus resultieren gleichgerichtete Drehmomente zwischen den synchronen Drehzahlen.

Der Wechselrichter ist dazu ausgebildet, Ansteuersignale für das Rotorwicklungssystem derart zu erzeugen, dass eine über die erste Statorwicklung übertragene Rotorleistung durch eine über die zweite Statorwicklung übertragene Rotorleistung kompensiert wird.

Der ersten Statorwicklung und der zweiten Statorwicklung kann ein gemeinsamer Statormagnetkreis bzw. Statoreisenkreis zugeordnet sein, wobei der Statormagnetkreis beispielsweise herkömmlich Blechpakete usw. aufweisen kann. Die erste und die zweite Statorwicklung bilden folglich ein Statorwicklungssystem.

Die erste Statorwicklung weist eine erste Polpaarzahl p1 auf und die zweite Statorwicklung weist eine zweite Polpaarzahl p2 auf, wobei p1 ≠ p2 gilt.

Das Rotorwicklungssystem kann 2 * (p1 + p2) gleichmäßig über einen Umfang des Rotorwicklungssystems verteilte Spulengruppen aufweisen.

Der Wechselrichter kann höchstens 2* (p1 + p2) Phasen bzw. Phasenanschlüssen aufweisen.

Dem Rotorwicklungssystem kann genau ein einzelner Rotormagnetkreis zugeordnet sein. Alternativ kann das Rotorwicklungssystem eine erste Rotorwicklung mit einem zugeordneten ersten Magnetkreis und eine von der ersten Rotorwicklung getrennte zweite Rotorwicklung mit einem zugeordneten zweiten, vom ersten Magnetkreis getrennten Magnetkreis aufweisen.

Das Antriebssystem kann ein mittels der Welle angetriebenes Lüfterrad aufweisen, wobei der Wechselrichter mit dem Lüfterrad drehfest gekoppelt und thermisch gekoppelt ist. Der oder die Wechselrichter können beispielsweise an beliebiger Position, beispielsweise im Bereich des Drehpunkts des Lüfterrads oder außerhalb des Drehpunkts an bzw. auf dem Lüfterrad befestigt sein.

Der Wechselrichter kann in das Lüfterrad integriert sein, beispielsweise indem das Lüfterrad ein Gehäuse für den oder die Wechselrichter bildet.

Die Erfindung wird nachfolgend unter Bezugnahme auf die Zeichnungen detailliert beschrieben. Hierbei zeigt schematisch:

Fig. 1    ein erfindungsgemäßes Antriebssystem mit zwei Antriebsteilsystemen gemäß einer ersten Ausführungsform,

Fig. 2    komplementäre Arbeitspunkte der in Fig. 1 gezeigten Antriebsteilsysteme und

Fig. 3    Wirkrichtungen von Rotorleistungen in den Betriebsquadranten des in Fig. 1 gezeigten Antriebssystems.

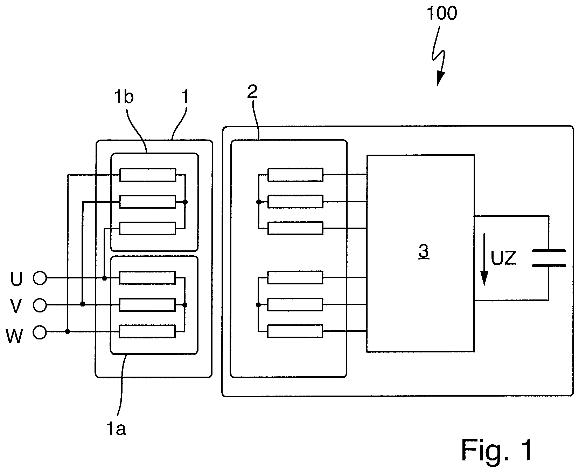

Fig. 1 zeigt ein erfindungsgemäßes Antriebssystem 100 mit einem Drehstrommotor, der ein Statorwicklungssystem 1 und ein Rotorwicklungssystem 2 aufweist, und genau einem 6-phasigen Wechselrichter 3, der Ansteuersignale für das Rotorwicklungssystem 2 erzeugt.

Der Drehstrommotor weist herkömmlich eine nicht dargestellte Welle auf.

Das Statorwicklungssystem bzw. Statorpaket 1 weist eine erste dreiphasige Statorwicklung 1a auf, die herkömmlich ohne Zwischenschaltung eines Wechselrichters direkt mit einem dreiphasigen Wechselspannungsnetz bzw. dessen Phasenspannungen U, V und W zur Erzeugung eines ersten Statordrehfelds verbunden ist.

Das Statorwicklungssystem 1 weist weiter eine zweite dreiphasige Statorwicklung 1b auf, die mit dem dreiphasigen Wechselspannungsnetz bzw. den Phasenspannungen U, V und W derart verbunden ist, dass sich gegenüber dem ersten Statordrehfeld, das mittels der ersten Statorwicklung 1a erzeugt wird, ein gegensinnig umlaufendes zweites magnetisches Statordrehfeld ergibt. Um zu bewirken, dass die mittels der Statorwicklungen 1a und 1b erzeugten magnetischen Statordrehfelder gegensinnig umlaufen, können die Statorwicklungen 1a und 1b beispielsweise gegensinnig gewickelt sein.

Der ersten Statorwicklung 1a und der zweiten Statorwicklung 1b ist ein gemeinsamer nicht gezeigter Statormagnetkreis bzw. Statoreisenkreis zugeordnet, wobei der Statormagnetkreis bzw. Statoreisenkreis beispielsweise herkömmlich Blechpakete usw. aufweisen kann.

Das Rotorwicklungssystem bzw. Rotorpaket 2 ist mit der Welle drehfest mechanisch gekoppelt. Dem Rotorwicklungssystem bzw. Rotorpaket 2 ist genau ein Rotormagnetkreis bzw. Rotoreisenkreis (nicht gezeigt) zugeordnet. Der Rotormagnetkreis bzw. Rotoreisenkreis kann beispielsweise herkömmlich Blechpakete usw. aufweisen.

Der Wechselrichter 3 ist mit der Welle drehfest mechanisch gekoppelt und elektrisch mit dem Rotorwicklungssystem 2 gekoppelt.

Der Wechselrichter 3 erzeugt Ansteuersignale in Form von Ansteuerspannungen und/oder Ansteuerströmen für das Rotorwicklungssystem 2 derart, dass ein erstes magnetisches Rotordrehfeld und ein zweites, in Bezug auf das erste Rotordrehfeld gegensinnig umlaufendes magnetisches Rotordrehfeld erzeugt werden. Das erste Rotordrehfeld wechselwirkt mit dem ersten Statordrehfeld derart, dass sich eine erste Motordrehzahl und ein erstes Drehmoment ergeben. Das zweite Rotordrehfeld wechselwirkt mit dem zweiten Statordrehfeld derart, dass sich die erste Motordrehzahl und ein zweites Drehmoment ergeben, wobei das zweite Drehmoment eine bezogen auf das erste Drehmoment identische Wirkrichtung aufweist

Die erste Statorwicklung 1a weist exemplarisch eine erste Polpaarzahl p1 von eins auf und die zweite Statorwicklung 1b weist exemplarisch eine zweite Polpaarzahl p2 von zwei auf. Das Rotorwicklungssystem 2 weist 2 * (p1 + p2) = 6 gleichmäßig über einen Umfang des Rotorwicklungssystems 2 verteilte Spulengruppen auf. Entsprechend weist der Wechselrichter 2 * (p1 + p2) = 6 zugehörige Phasen bzw. Phasenausgänge auf, die mit den zugehörigen Spulengruppen, wie gezeigt, elektrisch verbunden sind.

Erfindungsgemäß wird ein auf der Rotorseite angeordneter und mit der (Motor-) Welle mitlaufender Wechselrichter 3 eines doppelt gespeisten Asynchronmotors mit einem Rotorwicklungssystem 2 derart gesteuert, dass eine über die erste Statorwicklung 1a übertragene Rotorleistung durch eine über die zweite Statorwicklung 1b übertragene Rotorleistung kompensiert wird.

Die beiden Statorwicklungen 1a und 1b sind gemeinsam an ein dreiphasiges Netz mit den Phasenspannungen U, V, W zu legen und erzeugen in diesem im Wesentlichen sinusförmige Netzströme. Durch die 4-Quadrantenfähigkeit des Antriebssystems 100 sind im Weiteren keine zusätzlichen Maßnahmen wie Bremschopper bzw. -widerstände oder Elektroniken zur Energierückspeisung bei generatorischen Betriebszuständen erforderlich.

Die Erfindung basiert auf dem Prinzip der Stromrichterkaskade bei einem doppelt gespeisten Asynchronmotor. Die auftretenden Rotorströme und Rotorleistungen werden jedoch nicht über Schleifringe abgeführt, sondern mittels geeigneter Ansteuerung des Rotorwicklungssystems 2 in Verbindung mit dem Statorwicklungssystem 1.

Das Antriebssystem 100 weist zwei Antriebsteilsysteme (Teilmotoren) auf. In diesem Kontext erzeugt der Wechselrichter Ansteuersignale gebildet aus einem ersten Ansteuersignalsatz und einem zweiten Ansteuersignalsatz. Das erste Antriebsteilsystem umfasst die erste Statorwicklung 1a und das Rotorwicklungssystem 2, an das mittels des Wechselrichters 3 der erste Ansteuersignalsatz zur Bildung des ersten Teilmotors angelegt wird. Das zweite Antriebsteilsystem umfasst die zweite Statorwicklung 1b und das Rotorwicklungssystem 2, an das mittels des Wechselrichters 3 der zweite Ansteuersignalsatz zur Bildung des zweiten Teilmotors angelegt wird. Der erste Ansteuersignalsatz bewirkt das erste Rotordrehfeld und der zweite Ansteuersignalsatz bewirkt das zweite Rotordrehfeld.

Für p1 = 1 und p2 = 2 ergeben sich exemplarisch folgende Ansteuersignalsätze für die sechs Spulengruppen:

$$U1 = \quad \hat{u}_r * e^{j\omega_r t} \quad + \hat{u}_l * e^{-j\omega_l t}$$

$$V1 = \quad \hat{u}_r * e^{j(\omega_r t - \frac{2}{3}\pi)} \quad + \hat{u}_l * e^{-j(\omega_l t + \frac{2}{3}\pi)}$$

$$W1 = \quad \hat{u}_r * e^{j(\omega_r t - \frac{4}{3}\pi)} \quad + \hat{u}_l * e^{-j(\omega_l t + \frac{4}{3}\pi)}$$

$$U2 = - \quad \hat{u}_r * e^{j\omega_r t} \quad + \hat{u}_l * e^{-j\omega_l t}$$

$$V2 = - \hat{u}_r * e^{j(\omega_r t - \frac{2}{3}\pi)} \quad + \hat{u}_l * e^{-j(\omega_l t + \frac{2}{3}\pi)}$$

$$W2 = - \hat{u}_r * e^{j(\omega_r t - \frac{4}{3}\pi)} \quad + \hat{u}_l * e^{-j(\omega_l t + \frac{4}{3}\pi)}$$

$\hat{u}_r$ = *Amplitude des 2 - poligen Feldes*
$\hat{u}_l$ = *Amplitude des 4 - poligen Feldes*
$\omega_r$ = *Kreisfrequenz des 2 - poligen Feldes*
$\omega_l$ = *Kreisfrequenz des 4 - poligen Feldes*

Die mit "r" indexierten Größen bezeichnen den ersten Ansteuersignalsatz und die mit "l" indexierten Größen bezeichnen den zweiten Ansteuersignalsatz.

In dem zweiten Antriebsteilsystem auf derselben Welle wird die über das erste Antriebsteilsystem übertragene Rotorleistung in das speisende Netz zurückübertragen, wobei eine mechanische Leistung an der Welle mit der gleichen Wirkrichtung erzeugt wird, wie durch das erste Antriebsteilsystem.

Erfindungsgemäß wird ein komplementärer Arbeitspunkt im zweiten Antriebsteilsystem eingestellt. Dabei wird der Arbeitspunkt des zweiten Antriebsteilsystems mittels Steuerung des Wechselrichters 3 derart bestimmt, dass:

a) die Drehzahlen beider Teilmotoren bzw. Antriebsteilsysteme exakt gleich sind und

b) die Summe der beiden Rotorleistungen Null ergibt.

Um zwei gegenläufige, aber gleichfrequente magnetische Drehfelder auf einem gemeinsamen Statorwicklungssystem bzw. Statorpaket 1 nutzen zu können, ist es erforderlich, die Polpaarzahl der beiden Statorwicklungen 1a und 1b unterschiedlich auszuprägen. Drehfelder unterschiedlicher Polpaarzahlen beeinflussen sich bei einem gemeinsamen Magnetkreis nicht.

Zur Einstellung des komplementären Arbeitspunkts des zweiten Antriebsteilsystems für den Arbeitspunkt des ersten Antriebsteilsystems gilt unter der oben genannten Bedingung a)

$$f_{WR2} = f_{Netz} + \frac{p_1}{p_2}(f_{Netz} - f_{WR1)}$$

wobei p1 und p2 die Polpaarzahlen der beiden Statorwicklungen 1a und 1b bezeichnen, $f_{wr1}$ eine Frequenz einer Grundschwingung des ersten Ansteuersignalsatzes bezeichnet, die mit dem p1-poligen bzw. ersten Statordrehfeld wechselwirkt, und $f_{wr2}$ eine Frequenz einer Grundschwingung des zweiten Ansteuersignalsatzes bezeichnet, die mit dem p2-poligen bzw. zweiten Statordrehfeld wechselwirkt. Bezogen auf die oben genannten exemplarischen Ansteu-

ersignalsätze gilt hierbei

$$\omega_r = 2 * \pi * f_{WR1}$$

$$\omega_l = 2 * \pi * f_{WR2}$$

Solange p1 ≠ p2 gewählt wird, ist es möglich beide Statorwicklungssysteme auf einem gemeinsamen Eisenkreis aufzubringen.

Im Resultat prägt sich über den Statorumfang eine stehende Welle der Durchflutungsverteilung aus, die p1 + p2 Knotenpunkte besitzt, also bei z.B. p1 = 1 und p2 = 2 genau 3 Knotenpunkte. Die maximale Durchflutung prägt sich symmetrisch zwischen den Knotenpunkten mit der Summe der einzelnen Amplituden der Grundwellendurchflutungen aus. Dieses Verhalten kann bei der Auslegung des gemeinsamen Magnetkreises zusätzlich genutzt werden.

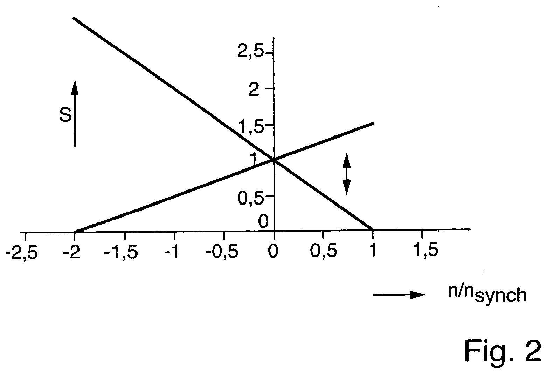

Fig. 2 zeigt den Zusammenhang zwischen den erforderlichen Arbeitsfrequenzen bzw. Drehzahlen, wobei n die Drehzahl, $n_{synch}$ die synchrone Drehzahl und s den Schlupf bezeichnet. Fig. 2 zeigt exemplarisch eine Darstellung für die beiden Antriebsteilsysteme, wie sie beispielsweise für die Polpaarzahlen p2/p1 = 1/2 gültig wäre.

Aus Fig. 2 geht hervor, dass zu jeder Arbeitsfrequenz bzw. Drehzahl n genau zwei Arbeitspunkte zu finden sind, zu jedem Antriebsteilsystem jeweils einer.

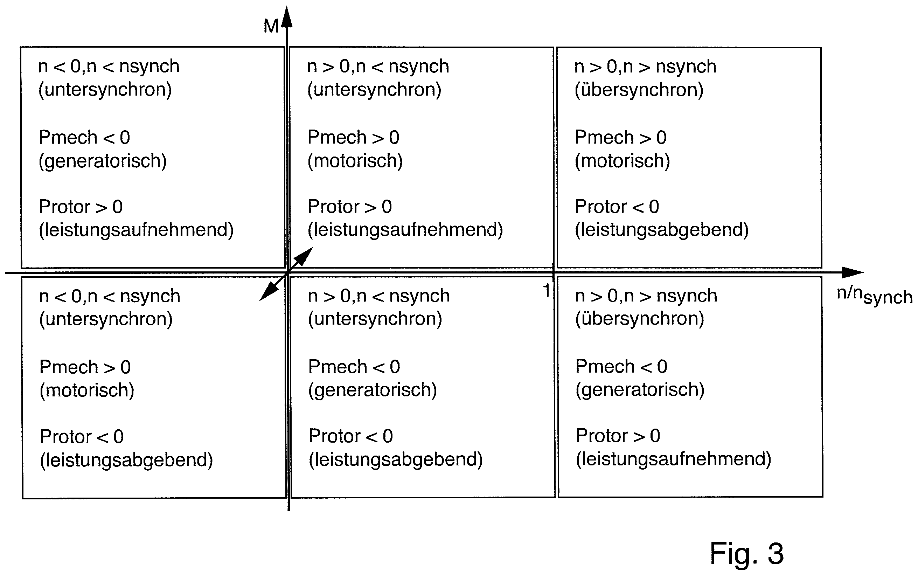

Fig. 3 verdeutlicht, dass in diesen Arbeitspunkten die Rotorleistungen bei gleicher Wirkrichtung des Motormomentes jeweils entgegengesetzte Vorzeichen aufweisen. Das hat seine Ursache darin, dass beispielsweise das erste Antriebsteilsystem im 1. Quadranten und das zweite Antriebsteilsystem im 3. Quadranten betrieben wird.

Für den Fall des generatorischen Betriebes liegen die Betriebspunkte der Antriebsteilsysteme im 2. und 4. Quadranten. Auch im generatorischen Betrieb verhalten sich die Rotorleistungen komplementär zueinander.

Aus Fig. 3 geht hervor, dass sich komplementäre Betriebspunkte mit in gleicher Richtung wirkenden Drehmomenten nicht oberhalb der synchronen Drehzahlen finden lassen. Drehzahlen oberhalb der synchronen Drehzahl lassen sich jedoch mit Drehmomenten im zweiten Antriebsteilsystem realisieren, die dem gewünschten Nutzmoment entgegenstehen. Allerdings sind in der Nähe der Synchrondrehzahl nur kleine Rotorleistungen im komplementären Antriebsteilsystem zu verarbeiten. Technisch realisieren mit gleichgerichteten Drehmomenten lässt sich der komplette Drehzahlbereich zwischen s2 = 0 und s1 = 0, wobei s1 der Schlupf im Antriebsteilsystem 1 ist und s2 der Schlupf im Antriebsteilsystem 2 ist.

Dadurch, dass sich beide Antriebsteilsysteme wie ein allgemeiner Transformator verhalten, wird beim Einschalten der Netzspannung auf der Statorseite zunächst über Freilaufdioden (nicht gezeigt) des auf der Rotorseite angeordneten Wechselrichters 3 eine Zwischenkreiskapazität geladen. Solange der Wechselrichter 3 nicht getaktet betrieben wird, stellt sich im Zwischenkreis die gleichgerichtete Leerlaufspannung der Rotorseite ein. Eine Drehbewegung des Motors setzt nicht ein.

Eine Hilfsspannungsversorgung des Wechselrichters 3 kann über einen Abgriff der Zwischenkreisspannung UZ erfolgen. Die notwendige Leistung wird über eine Verstimmung der Leistungsbilanz der Rotorleistung gedeckt. Das ist auch bei synchroner Drehzahl eines der Antriebsteilsysteme durch das jeweils andere Antriebsteilsystem möglich.

Als Betriebs- bzw. Regelungsverfahren des Wechselrichters 3 werden bevorzugt so genannte Vectorregelungen eingesetzt, die es erlauben, die Amplituden und die Phasenwinkel der Rotorströme zu regeln. Die regelungstechnischen Verfahren zur Beherrschung einer doppelt gespeisten Asynchronmaschine sind hinlänglich bekannt und können auch hier verwendet werden.

Die Drehzahl n = 0 stellt für das erfindungsgemäße Antriebssystem 100 keinen außergewöhnlichen Betriebszustand dar. Da die zu regelnden Rotorströme in beiden Antriebsteilsystemen mit Netzfrequenz umlaufen, treten die sonst in Asynchronmotoren vorhandenen Schwierigkeiten beim Beherrschen des Motorstillstandes mit Moment vorliegend nicht auf. Es tritt ein weicher Übergang zwischen motorischem und generatorischem Betrieb auf. Dies hat eine besondere Bedeutung z.B. für Hubantriebe.

Im Stillstand weist die Rotorleistung eines Antriebsteilsystems eine Höhe auf, die der Wellenleistung bei synchroner Drehzahl bei gleichem Drehmoment entspricht. Diese Rotorleistung führt bei Vernachlässigung von im System vorhandenen Verlusten im Stillstand zu einem gleich hohen Drehmoment im zweiten Antriebsteilsystem. Daraus folgt, dass im Anlauf jedes Antriebsteilsystem einen hälftigen Beitrag zum erforderlichen Drehmoment leistet. Diese Eigenschaft macht das erfindungsgemäße Antriebssystem für alle Applikationen einsetzbar, in denen hohe und auch zyklische Anlaufdrehmomente erforderlich sind, und mit steigender Drehzahl der Drehmomentenbedarf rückläufig ist, wie z.B. in vielen Fördertechn ikanwendungen.

Die Frequenzen $f_{WR1}$ und $f_{WR2}$ der Rotorströme werden in beiden Antriebsteilsystemen eingeprägt. Unter Last verändern sich ausschließlich die Amplitude und der Winkel der Rotorströme, nicht aber die Frequenz. Ein lückenloser Wechsel durch alle vier Betriebsquadranten ist mit diesem Antrieb möglich.

Änderungen der Netzfrequenz führen zu Änderung der Drehzahl. Für den komplementären Arbeitspunkt ist jedoch die Frequenz $f_{WR2}$ bei einer Änderung der Netzfrequenz nachzuregeln, um die Bestimmungsgleichung (siehe oben) für den komplementären Arbeitspunkt einzuhalten. Da hieraus die Höhe der Frequenznachführung bekannt ist, kann auch die Frequenz $f_{WR1}$ entsprechend nachgeführt werden. Das System verhält sich dann drehzahlsteif.

Prinzipiell ist die Topologie des Wechselrichters 3 nicht auf Spannungszwischenkreiswechselrichter beschränkt. I-Umrichter und Direktumrichter lassen sich ebenfalls prinzipiell nutzen.

Zu einer gleichmäßigen Ausnutzung des Rotorwicklungssystems 2 und der zugehörigen Wechselrichterphasen gelangt man, wenn das Rotorwicklungssystem 2 * (p1 + p2) gleichmäßig über den Rotorumfang verteilte Spulengruppen aufweist.

Der Wechselrichter ist entsprechend als 2 * (p1 + p2)-phasiger Wechselrichter auszuführen.

Mit einer derartigen Wicklungs-/Umrichteranordnung ist es möglich, sowohl das p1-polige Drehfeld als auch das p2-polige gegenläufige Drehfeld, das durch die Statorwicklungen 1a bzw. 1b aufgeprägt wird, aufzunehmen.

Durch den Wechselrichter 3 sind die zu $f_{WR1}$ und $f_{WR2}$ gehörenden Felder gleichzeitig aufzumodulieren.

Das (p1 + p2)-strängige Wicklungs-/Wechselrichtersystem kann virtuell in zwei Wicklungssysteme mit einem Versatz von 180° elektrisch (bei p1 = 1 und p2 = 2) aufgeteilt werden. Dann ist die Ansteuerung dieser beiden virtuellen Teilsysteme so zu wählen, dass die Grundwelle des p1-poligen Feldes (p1 < p2 angenommen) mit einem Phasenversatz von 180° elektrisch (bei p1 = 1 und p2 = 2) moduliert wird und die Grundwelle des p2-poligen Feldes ohne Phasenversatz in die beiden virtuellen Teilsysteme moduliert wird.

Mittels der Erfindung kann eine Asynchronmaschine als drehzahlvariabler Antrieb am starren Netz in allen vier Betriebsquadranten betrieben werden. Weiter ist ein rückführloser Betrieb mit hoher Genauigkeit der Drehzahl möglich. Es können kleine Drehzahlen bis in den Stillstand und der Wechsel in den generatorischen Betrieb beherrscht werden. Systembedingt treten lediglich sinusförmige Netzströme auf, wodurch die Netzbelastung erheblich reduziert wird.

Es ist ein blindleistungsloser Betrieb im Netz möglich, da die Blindleistung des Motors über den bzw. die rotorseitigen Wechselrichter geführt werden kann. Dadurch kann die Netzbelastung weiter reduziert werden.

Gegenüber herkömmlichen Systemen kann der Wechselrichter für kleinere Leistungen dimensioniert werden, da nur die Läuferleistung in dem bzw. den Wechselrichtern geführt werden muss.

Es können kostengünstige und verlustarme Leistungsbauteile mit niedriger Nennspannung eingesetzt werden, da über das Windungszahlverhältnis der Läufer-/Statorwicklungen die Rotorspannung bestimmt werden kann.

Der EMV-Aufwand kann reduziert werden, da auf der Läuferseite des Wechselrichters geschaltet wird.

Der der Drehstrommotor gemäß Fig. 1 nur ein einzelnes Statorwicklungssystem bzw. Statorwicklungspaket 1 und ein einzelnes Rotorwicklungssystem bzw. Rotorwicklungspaket 2 aufweist, können notwendige elektronische Komponenten auf einer Stirnseite des Drehstrommotors angeordnet und thermisch gekapselt werden.

## Patentansprüche

1. Antriebssystem (100, 100'), aufweisend:

   - einen Drehstrommotor, aufweisend:

      - eine Welle,
      - eine erste dreiphasige Statorwicklung (1a), die mit einem dreiphasigen Wechselspannungsnetz (U, V, W) zu verbinden ist,
      - eine zweite dreiphasige Statorwicklung (1b), die mit dem dreiphasigen Wechselspannungsnetz (U, V, W) derart zu verbinden ist, dass sich gegenüber einem ersten Statordrehfeld, das mittels der ersten Statorwicklung (1a) erzeugt wird, ein gegensinnig umlaufendes zweites Statordrehfeld ergibt, und
      - ein Rotorwicklungssystem (2), das mit der Welle drehfest mechanisch gekoppelt ist, und

   - genau einen Wechselrichter (3), der mit der Welle drehfest mechanisch gekoppelt ist und der elektrisch mit dem Rotorwicklungssystem (2) gekoppelt ist, wobei der Wechselrichter (3) dazu ausgebildet ist, Ansteuersignale für das Rotorwicklungssystem (2) derart zu erzeugen, dass ein erstes Rotordrehfeld und ein zweites Rotordrehfeld erzeugt werden, wobei das erste Rotordrehfeld mit dem ersten Statordrehfeld derart wechselwirkt, dass sich eine erste Motordrehzahl und ein erstes Drehmoment ergibt, und wobei das zweite Rotordrehfeld mit dem zweiten Statordrehfeld derart wechselwirkt, dass sich die erste Motordrehzahl und ein zweites Drehmoment ergibt, wobei das zweite Drehmoment eine bezogen auf das erste Drehmoment identische Wirkrichtung aufweist,

      - wobei der Wechselrichter (3) dazu ausgebildet ist, Ansteuersignale für das Rotorwicklungssystem (2) derart zu erzeugen, dass eine über die erste Statorwicklung (1a) übertragene Rotorleistung durch eine über die zweite Statorwicklung (1b) übertragene Rotorleistung kompensiert wird, und
- wobei die erste Statorwicklung (1a) eine erste Polpaarzahl p1 aufweist und die zweite Statorwicklung (1b) eine zweite Polpaarzahl p2 aufweist, wobei p1 ≠ p2 gilt.

2. Antriebssystem (100) nach Anspruch 1, **dadurch gekennzeichnet, dass** der ersten Statorwicklung (1a) und der zweiten Statorwicklung (1b) ein gemeinsamer Statormagnetkreis zugeordnet ist.

3. Antriebssystem (100) nach Anspruch 1 oder 2, **dadurch gekennzeichnet, dass** das Rotorwicklungssystem (2) 2 * (p1 + p2) gleichmäßig über einen Umfang des Rotorwicklungssystems (2) verteilte Spulengruppen aufweist.

4. Antriebssystem (100) nach einem der vorhergehenden Ansprüche, **dadurch gekennzeichnet, dass** der Wechselrichter (3) höchstens 2 * (p1 + p2) Phasen aufweist.

5. Antriebssystem (100) nach einem der vorhergehenden Ansprüche, **dadurch gekennzeichnet, dass** dem Rotorwicklungssystem (2) genau ein Rotormagnetkreis zugeordnet ist.

6. Antriebssystem (100) nach einem der vorhergehenden Ansprüche, **gekennzeichnet durch** ein mittels der Welle angetriebenes Lüfterrad, wobei der Wechselrichter (3) mit dem Lüfterrad drehfest gekoppelt und thermisch gekoppelt ist.

**Claims**

1. Drive system (100, 100'), comprising:

   - a three-phase motor, comprising:

     - a shaft,
     - a first three-phase stator winding (1a), which is to be connected to a three-phase AC voltage grid (U, V, W),
     - a second three-phase stator winding (1b), which is to be connected to the three-phase AC voltage grid (U, V, W) in such a way that a second stator rotating field rotating in opposition results with respect to a first stator rotating field, which is generated by means of the first stator winding (1a), and
     - a rotor winding system (2), which is mechanically coupled in rotationally fixed fashion to the shaft, and

   - precisely one inverter (3), which is mechanically coupled in rotationally fixed fashion to the shaft and which is electrically coupled to the rotor winding system (2), wherein the inverter (3) is designed to generate actuation signals for the rotor winding system (2) in such a way that a first rotor rotating field and a second rotor rotating field are generated, wherein the first rotor rotating field interacts with the first stator rotating field in such a way that a first motor speed and a first torque are produced, and wherein the second rotor rotating field interacts with the second stator rotating field in such a way that the first motor speed and a second torque are produced, wherein the second torque has an identical direction of action with respect to the first torque,

     - wherein the inverter (3) is designed to generate actuation signals for the rotor winding system (2) in such a way that a rotor power transmitted via the first stator winding (1a) is compensated for by a rotor power transmitted via the second stator winding (1b), and
     - wherein the first stator winding (1a) has a first pole pair number p1, and the second stator winding (1b) has a second pole pair number p2, where p1 ≠ p2.

2. Drive system (100) according to Claim 1, **characterized in that** a common stator magnetic circuit is assigned to the first stator winding (1a) and the second stator winding (1b).

3. Drive system (100) according to Claim 1 or 2, **characterized in that** the rotor winding system (2) has 2 * (p1 + p2) coil groups distributed uniformly over a circumference of the rotor winding system (2).

4. Drive system (100) according to any one of the preceding claims, **characterized in that** the inverter (3) has at most 2 * (p1 + p2) phases.

5. Drive system (100) according to any one of the preceding claims, **characterized in that** precisely one rotor magnetic circuit is assigned to the rotor winding system (2).

6. Drive system (100) according to any one of the preceding claims, **characterized by** a fan impeller driven by means of the shaft, wherein the inverter (3) is coupled in rotationally fixed fashion and coupled thermally to the fan impeller.

**Revendications**

1. Système d'entraînement (100, 100'), présentant :

- un moteur triphasé, présentant :

- un arbre,
- un premier enroulement de stator triphasé (la), qui doit être relié à un réseau de tension alternative triphasé (U, V, W),
- un deuxième enroulement de stator triphasé (1b), qui doit être relié au réseau de tension alternative triphasé (U, V, W) de telle sorte qu'il en résulte un deuxième champ rotatif de stator tournant en sens inverse par rapport à un premier champ rotatif de stator qui est généré au moyen du premier enroulement de stator (la), et
- un système d'enroulement de rotor (2), qui est couplé mécaniquement à l'arbre de manière immobile en rotation, et

- exactement un onduleur (3), qui est couplé mécaniquement à l'arbre de manière immobile en rotation et qui est couplé électriquement au système d'enroulement de rotor (2), l'onduleur (3) étant configuré pour générer des signaux de commande pour le système d'enroulement de rotor (2) de manière à générer un premier champ rotatif de rotor et un deuxième champ rotatif de rotor, le premier champ rotatif de rotor interagissant avec le premier champ rotatif de stator de telle sorte qu'il en résulte une première vitesse de rotation de moteur et un premier couple, et le deuxième champ rotatif de rotor interagissant avec le deuxième champ rotatif de stator de telle sorte qu'il en résulte la première vitesse de rotation de moteur et un deuxième couple, le deuxième couple présentant une direction d'action identique à celle du premier couple,
- l'onduleur (3) étant configuré pour générer des signaux de commande pour le système d'enroulement de rotor (2) de telle sorte qu'une puissance de rotor transmise par l'intermédiaire du premier enroulement de stator (la) est compensée par une puissance de rotor transmise par l'intermédiaire du deuxième enroulement de stator (1b), et
- le premier enroulement de stator (la) présentant un premier nombre de paires de pôles p1 et le deuxième enroulement de stator (1b) présentant un deuxième nombre de paires de pôles p2, avec $p1 \neq p2$.

2. Système d'entraînement (100) selon la revendication 1, **caractérisé en ce qu'**un circuit magnétique de stator commun est associé au premier enroulement de stator (la) et au deuxième enroulement de stator (1b).

3. Système d'entraînement (100) selon la revendication 1 ou 2, **caractérisé en ce que** le système d'enroulement de rotor (2) présente 2 * (p1 + p2) groupes de bobines répartis de manière uniforme sur une circonférence du système d'enroulement de rotor (2).

4. Système d'entraînement (100) selon l'une quelconque des revendications précédentes, **caractérisé en ce que** l'onduleur (3) présente au plus 2 * (p1 + p2) phases.

5. Système d'entraînement (100) selon l'une quelconque des revendications précédentes, **caractérisé en ce qu'**exactement un circuit magnétique de rotor est associé au système d'enroulement de rotor (2).

6. Système d'entraînement (100) selon l'une quelconque des revendications précédentes, **caractérisé par** une roue de soufflante entraînée au moyen de l'arbre, l'onduleur (3) étant couplé de manière immobile en rotation et étant couplé thermiquement à la roue de soufflante.

Fig. 1

Fig. 2

M

| n < 0,n < nsynch (untersynchron) Pmech < 0 (generatorisch) Protor > 0 (leistungsaufnehmend) | n > 0,n < nsynch (untersynchron) Pmech > 0 (motorisch) Protor > 0 (leistungsaufnehmend) | n > 0,n > nsynch (übersynchron) Pmech > 0 (motorisch) Protor < 0 (leistungsabgebend) |
|---|---|---|
| n < 0,n < nsynch (untersynchron) Pmech > 0 (motorisch) Protor < 0 (leistungsabgebend) | n > 0,n < nsynch (untersynchron) Pmech < 0 (generatorisch) Protor < 0 (leistungsabgebend) | n > 0,n > nsynch (übersynchron) Pmech < 0 (generatorisch) Protor > 0 (leistungsaufnehmend) |

1

n/nsynch

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Brushless doubly-fed induction machine with rotating power electronic converter for wind power applications. **NAVEED UR REHMAN MALIK et al.** ELECTRICAL MACHINES AND SYSTEMS (ICEMS), 2011 INTERNATIONAL CONFERENCE ON. IEEE, 20. August 2011, 1-6

- GENERAL POLE NUMBER MODEL OF THE BRUSHLESS DOUBLY-FED MACHINE. **BOGER M S et al.** IEEE TRANSACTIONS ON INDUSTRY APPLICATIONS. IEEE SERVICE CENTER, 01. September 1995, vol. 31, 1022-1028